# EUROPÄISCHE PATENTANMELDUNG

(11) **EP 2 166 650 A1**
(43) Veröffentlichungstag der Anmeldung: **24.03.2010**
(21) Anmeldenummer: 09100125.5
(22) Anmeldetag: 18.02.2009
(51) Int. Cl.: H02K 13/10

(54) **Kommutator und damit ausgestatetter Elektromotor**

(30) Priorität: 19.09.2008 DE 102008042226
(71) Anmelder: Robert Bosch GmbH, 70442 Stuttgart (DE)
(72) Erfinder: Pauli, Stephan, 77855, Achern (DE)

(57) **Zusammenfassung**

Die Erfindung betrifft einen Kommutator mit einem im Wesentlichen zylindrischen Grundkörper, an dessen Mantelfläche zumindest zwei Kontaktelemente angeordnet sind, wobei jedes Kontaktelement über zumindest einen Kondensator mit jedem benachbarten Kontaktelement verbunden ist, wobei die Kondensatoren durch Platten gebildet werden, welche im Inneren des Grundkörpers angeordnet sind und welche mit je einem Kontaktelement in elektrisch leitfähiger Verbindung stehen..

## Beschreibung

Die Erfindung betrifft einen Kommutator mit einem im Wesentlichen zylindrischen Grundkörper, an dessen Mantelfläche zumindest zwei Kontaktelemente angeordnet sind, wobei jedes Kontaktelement über zumindest einen Kondensator mit jedem benachbarten Kontaktelement verbunden ist.

Ein Kommutator der eingangs genannten Art wird in mechanisch kommutierenden Gleichstrommotoren verwendet, um das von den Ankerwicklungen erzeugte magnetische Feld zyklisch mit dem Umlauf des Rotors umzupolen. Im Betrieb des Elektromotors wird den Kontaktelementen des Kommutators über zumindest zwei Bürstenkontakte, beispielsweise aus weichem Kohlenstoffmaterial, ein Betriebsstrom zugeführt. Die Rotation des Kommutators unter den ortsfest angeordneten Bürsten bewirkt dabei einen zyklischen Kontaktschluss mit den Kontaktelementen. Beim Öffnen des Kontaktschlusses zu den Ankerwicklungen entsteht aufgrund der Induktivität der Ankerwicklungen ein Spannungsimpuls. Dieser Spannungsimpuls erzeugt eine elektromagnetische Störstrahlung, welche in der Nähe des Elektromotors befindliche elektronische Geräte stören kann.

Zur Erhöhung der elektromagnetischen Verträglichkeit eines eingangs genannten Elektromotors ist es aus dem Stand der Technik bekannt, jedes Kontaktelement mit seinen unmittelbar benachbarten Kontaktelementen über einen Kondensator zu verbinden. Dieser Kondensator bildet einen Kurzschluss für die hochfrequenten Anteile der elektromagnetischen Störstrahlung. Aus dem Stand der Technik ist dazu bekannt, die Kondensatoren als diskrete Bauteile zwischen den Kontaktelementen mittels einer Löt- oder Schweißverbindung einzubauen. In einer weiteren bekannten Ausführungsform wird vorgeschlagen, Kondensatoren auf einer Leiterplatte anzuordnen, welche in einen Hohlraum im Inneren des Kommutators aufgenommen wird und über entsprechende Anschlusskontakte mit den Kontaktelementen in Verbindung steht.

Nachteilig an diesen bekannten Ausführungsformen ist jedoch der erhöhte Montageaufwand der Kondensatoren, die geringe mechanische Stabilität und die bei ungünstiger Anordnung der Kondensatoren entstehende Unwucht des Kommutators.

Ausgehend vom Stand der Technik liegt der Erfindung daher die Aufgabe zugrunde, einen Kommutator anzugeben, welcher in einem einfachen Fertigungsprozess erhältlich ist, eine hohe mechanische Stabilität und geringe dynamische Unwuchten aufweist.

Die Aufgabe wird erfindungsgemäß gelöst durch einen Kommutator mit einem im Wesentlichen zylindrischen Grundkörper, an dessen Mantelfläche zumindest zwei Kontaktelemente angeordnet sind, wobei jedes Kontaktelement über zumindest einen Kondensator mit jedem benachbarten Kontaktelement verbunden ist, wobei die Kondensatoren durch eine Mehrzahl von Platten gebildet werden, welche im Inneren des Grundkörpers angeordnet sind und welche mit je einem Kontaktelement in elektrisch leitfähiger Verbindung stehen.

Erfindungsgemäß wird vorgeschlagen, den Grundkörper des Kommutators als Entstörkondensator auszubilden, indem der Kommutator mehrere, durch ein Dielektrikum voneinander getrennte Platten enthält. Als Dielektrikum kommt beispielsweise eine Keramik oder ein Polymer in Frage. Die Platten können in besonders einfacher Weise als Stanzteil aus einem Blech hergestellt werden oder aber als leitfähige Beschichtung auf einem Dielektrikum. In einer weiteren Ausführungsform der Erfindung kann der vorgeschlagene Kommutator durch Sintern verschiedener Materiallagen hergestellt werden. Platten und Dielektrikum bilden einen mechanisch robusten Stapel, welcher als Grundkörper dient und bezüglich seiner Masseverteilung vollkommen symmetrisch ausgeführt werden kann, um Unwuchten bei der Rotation des Stapels zu verhindern. Die Kondensatorplatten können bereichsweise an die Zylindermantelfläche des Grundkörpers herausgeführt und dadurch in einfacher Weise mit den Kontaktelementen des Kommutators kontaktiert werden. Hierzu kann beispielsweise eine Lötverbindung, eine Schweißverbindung, eine Pressverbindung oder eine Klebung verwendet werden. Zur Herstellung einer Schweißverbindung eignet sich insbesondere ein Laserschweißverfahren. Eine Pressverbindung ergibt sich beispielsweise durch Rastelemente wie Nuten oder Schlitze, in welche die Kontaktelemente so aufgenommen werden, dass diese eine Andruckkraft gegen die Kondensatorplatte erfahren. In einer weiteren Ausführungsform können auch die Kontaktelemente in einem Aufdampfprozess aus der Gasphase hergestellt und/oder galvanisch abgeschieden werden.

Zur Erhöhung der Kapazität kann vorgesehen sein, dass mehrere Platten übereinander angeordnet sind, welche jeweils mit demselben Kontaktelement verbunden sind. Weiterhin kann die Größe der Platten maximiert werden, wenn die Platten in Form eines Kreissektors bzw. Kreisabschnittes ausgeführt sind.

Um einen für die hochfrequenten Anteile der elektromagnetischen Störstrahlung durchgängigen Kontakt zu benachbarten Kontaktelementen herzustellen, weisen die Kreissektoren bzw. Kreisabschnitte der Kondensatorplatten einen größeren Winkel auf, als von den Kontaktelementen überstrichen wird. Die Kondensatorplatten stehen somit zumindest einseitig über die Kontaktelemente hinaus. Bevorzugt stehen die Kondensatorplatten beidseitig über die Kontaktelemente hinaus. Eine Kondensatorplatte überdeckt somit etwa zur Hälfte eine jede Kondensatorplatte eines benachbarten Kontaktelementes. Um Kurzschlüsse zu vermeiden, befinden sich zwischen Kondensatorplatten, welche auf derselben Ebene innerhalb des Stapels angeordnet sind, Isolationsabstände. Diese Isolationsabstände können in einer Ausführungsform der Erfindung ebenfalls mit einem Dielektrikum aufgefüllt sein.

Nachfolgend soll die Erfindung anhand von Figuren ohne Beschränkung des allgemeinen Erfindungsgedankens näher erläutert werden. Dabei zeigt
- Figur 1: den Querschnitt durch einen Kommutator gemäß dem Stand der Technik.
- Figur 2: zeigt den Querschnitt durch einen erfindungsgemäß vorgeschlagenen Kommutator.
- Figur 3: zeigt einen Längsschnitt durch einen erfindungs-gemäßen Kommutator.

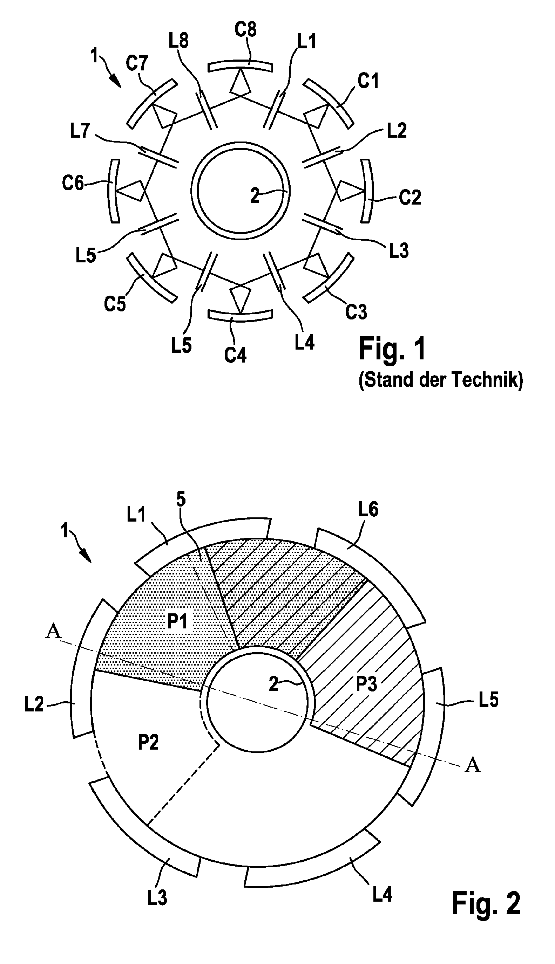

Figur 1 zeigt einen Querschnitt eines Kommutators 1 gemäß dem Stand der Technik. Der Kommutator 1 weist einen im Wesentlichen zylindrischen Grundkörper auf, welcher auf der Welle des Elektromotors rotiert. Zur Befestigung des Kommutators 1 auf der nicht dargestellten Welle eines Elektromotors dient die Aufnahme 2. Die Aufnahme 2 kann beispielsweise eine Spannhülse, eine Verschraubung oder eine Presspassung aufweisen, um den Kommutator 1 in an sich bekannter Weise in einem Elektromotor zu befestigen.

Den Ankerwicklungen des Rotors wird elektrische Energie über mindestens zwei Kontaktelemente zugeführt. Im Ausführungsbeispiel gemäß Figur 1 sind acht Kontaktelemente L1, L2, L3, L4, L5, L6, L7 und L8 dargestellt. Im Betrieb des Elektromotors werden die Kontaktelemente von Bürstenkontakten kontaktiert. Beispielsweise kann dann ein elektrischer Strom durch eine Ankerwicklung fließen, welche über die Kontaktelemente L8 und L4 kontaktiert wird. Beim Weiterdrehen des Rotors mit dem daran befestigten Kommutator wird dieser Kontakt geöffnet und die zwischen den Kontaktelementen L1 und L5 liegende Ankerwicklung mit elektrischer Energie versorgt. Beim Weiterdrehen des Kommutators wird schließlich die Ankerwicklung zwischen den Kontaktelementen L2 und L6 bestromt. Dieser Vorgang setzt sich zyklisch fort.

Aufgrund der Induktivität der Ankerwicklungen entsteht beim Trennen der elektrischen Kontakte ein Spannungsimpuls. Dieser kann eine elektromagnetische Störstrahlung erzeugen, welche elektronische Geräte in der Nachbarschaft des Elektromotors beeinflussen kann.

Zur Verminderung der elektromagnetischen Störstrahlung sind Kondensatoren C1, C2, C3, C4, C5, C6, C7 und C8 vorgesehen, welche jedes der Kontaktelemente L1, L2, L3, L4, L5, L6, L7 und L8 mit ihrem jeweils benachbarten Kontaktelement L1, L2, L3, L4, L5, L6, L7 und L8 verbinden. Beispielsweise verbindet der Kondensator C7 die Kontaktelemente L7 und L8 miteinander. Der Kondensator C8 verbindet die Kontaktelemente L8 und L1 miteinander.

Die Kondensatoren sind gemäß dem Stand der Technik als diskrete, gehäuste Bauelemente mit Drahtanschlüssen ausgeführt. Die Drahtanschlüsse können in einem Löt- oder Schweißverfahren an den Innenseiten der Kontaktelemente L1, L2, L3, L4, L5, L6, L7 und L8 angebracht werden. Auf diese Weise wird die Außenseite der Kontaktelemente nicht durch die Anschlusskontakte der Kondensatoren beeinträchtigt und bilden eine glatte Kontaktfläche für den Kontaktschluss durch die Bürstenkontakte zur Verfügung.

Figur 2 zeigt ein Ausführungsbeispiel eines erfindungsgemäß vorgeschlagenen Kommutators 1. Auch der erfindungsgemäße Kommutator 1 weist einen im Wesentlichen zylindrischen Grundkörper auf. An der Zylindermantelfläche des Grundkörpers befinden sich Kontaktelemente, welche bei Betrieb des Elektromotors durch Bürstenkontakte paarweise kontaktiert werden. Im Ausführungsbeispiel nach Figur 2 sind sechs Kontaktelemente L1, L2, L3, L4, L5 und L6 dargestellt. Diese Zahl ist lediglich exemplarisch zu verstehen. In anderen Ausführungsbeispielen der Erfindung können mehr oder weniger Kontaktelemente verwendet werden. Insbesondere liegt die Anzahl der Kontaktelemente zwischen zwei und 100.

Ebenfalls weist der erfindungsgemäß vorgeschlagene Kommutator eine Befestigung 2 auf, mittels welcher der Kommutator in an sich bekannter Weise auf der Rotorwelle eines Elektromotors befestigt werden kann. Die Befestigung kann beispielsweise durch Schrauben, Löten, Schweißen, Einpressen oder Klemmen erfolgen.

Das Innere des Grundkörpers des Kommutators 1 besteht erfindungsgemäß aus einem Schichtstapel aus leitfähigen Kondensatorplatten P1, P2, P3,... und dazwischen liegenden Isolatoren 3. Ein Isolator im Sinne der vorliegenden Erfindung kann dabei insbesondere ein Dielektrikum sein. Das Dielektrikum kann dabei insbesondere ein Polymer oder eine Keramik sein. Das Dielektrikum kann entweder durch spanende Bearbeitung, durch Gießen oder durch Aufdampfen zwischen den Kondensatorplatten angeordnet werden. Die Kondensatorplatten P1, P2 und P3 bestehen insbesondere aus einem Metall oder einer Legierung. Alternativ können die Kondensatorplatten auch aus einem Halbleitermaterial oder einem leitfähigen Kunststoff bestehen. Die Kondensatorplatten können durch Stanzen, Biegen oder spanende Bearbeitung in die gewünschte Form gebracht werden. In weiteren Ausführungsformen der Erfindung können auch die Kondensatorplatten P1, P2, P3 in einem Aufdampfverfahren aus der Gasphase hergestellt sein.

Zur Erläuterung des Wirkprinzips der Erfindung sind exemplarisch drei Kondensatorplatten P1, P2 und P3 in Figur 2 dargestellt. Dem Fachmann ist dabei geläufig, dass sich die gezeigte Plattenanordnung zyklisch wiederholt, so dass alle Kontaktelemente L1, L2, L3, L4, L5 und L6 mit mindestens einer Kondensatorplatte kontaktiert sind.

Eine einzelne Kondensatorplatte weist in etwa eine Grundform eines Kreissektors bzw. eines Kreisabschnittes auf. Dabei kann die innere, der Befestigungsvorrichtung 2 zugewandte Kante der Kondensatorplatte P1, P2 oder P3 zur Vergrößerung der effektiven Fläche eine Kontur aufweisen, welche zur Außenkontur der Befestigungsvorrichtung 2 komplementär ist. In Figur 2 ist dies ein Kreisbogen.

Die in Figur 2 gepunktet dargestellte Kondensatorplatte P1 ist leitfähig am Kontaktelement L1 befestigt. Die Kondensatorplatte L1 erstreckt sich dabei beidseitig des Kontaktelementes L1 bis etwa zur Mitte der benachbarten Kontaktelemente L2 und L6. Zu den benachbarten Kontaktelementen L2 und L6 besteht jedoch keine leitfähige Verbindung, um einen Kurzschluss der Kontaktelemente über die Kondensatorplatte P1 zu vermeiden.

Das Kontaktelement L6 ist mit der schraffiert dargestellten Kondensatorplatte P3 elektrisch leitfähig verbunden. Die Kondensatorplatte P3 weist im Ausführungsbeispiel nach Figur 2 dieselbe Grundform auf wie die Kondensatorplatte P1. Somit erstreckt sich auch die Platte P3 bis etwa in die Mitte der zu L6 benachbart angeordneten Kontaktelemente L1 und L5. Die Platte P3 weist jedoch ebenfalls keine leitfähige Verbindung zu den Kontaktelementen L1 und L5 auf. Zur Vermeidung eines Kurzschlusses zwischen den Platten P1 und P3 liegen diese auf unterschiedlichen Ebenen. Zwischen beiden Platten ist ein Dielektrikum angeordnet. Somit bildet der Flächenbereich, in welchen P1 und P3 überlappen, einen Kondensator, welcher einer Wechselspannung den Übertritt vom Kontaktelement L1 zum Kontaktelement L6 oder vice versa ermöglicht.

In gleicher Weise ist das Kontaktelement L2 mit einer Kondensatorplatte P2 leitfähig verbunden. Diese ist in Figur 2 ohne Schraffur dargestellt. Auch die Kondensatorplatte P2 erstreckt sich in etwa bis zur Mitte der dem Kontaktelement L2 benachbarten Kontaktelemente L1 und L3. Auch die Platte P2 befindet sich nicht in derselben Ebene wie die Platte P1. Dadurch bildet sich im Überlappungsbereich der Platten P1 und P2 ein Kondensator, welcher die Kontaktelemente L1 und L2 miteinander verbindet.

Fallweise können die Platten P2 und P3 in einer Ebene angeordnet sein. In diesem Fall reichen beide Platten nicht exakt bis zur Mitte des Kontaktelementes L1, um durch einen zwischen den Platten P2 und P3 angeordneten Spalt 5 einen Kurzschluss zwischen den Platten P2 und P3 zu verhindern. Dieser Spalt 5 kann mit demselben Dielektrikum 3 ausgefüllt sein, welches auch zwischen den Kondensatorplatten angeordnet ist. Selbstverständlich kann der Fachmann jedoch auch die Platte P2 unter der Platte P1 anordnen, so dass die im Dielektrikum eingebetteten Kondensatorplatten P1, P2 und P3 den optischen Eindruck einer Wendeltreppe ergeben.

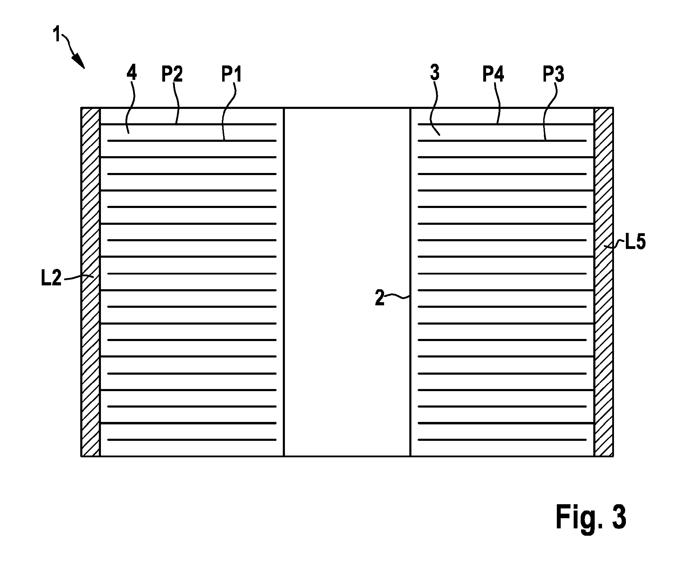

Figur 3 zeigt einen Längsschnitt durch den erfindungsgemäß vorgeschlagenen Kommutator entlang der in Figur 2 angegebenen Schnittlinie A-A. Der Kommutator 1 weist wie in Figur 3 ersichtlich einen zylindrischen Grundkörper auf. Entlang der Symmetrieachse des Zylinders ist die Befestigungsvorrichtung 2 zur Montage des Kommutators auf einer Welle angeordnet. Rechts und links der Befestigungsvorrichtung 2 befinden sich im Längsschnitt die Kontaktelemente L2 und L5. Aus Figur 3 ist ersichtlich, dass die in Figur 2 dargestellte Anordnung von Kondensatorplatten mehrfach übereinander vorgesehen ist. Auf diese Weise wird die Kapazität eines einzelnen Plattenpaares, beispielsweise P1 und P2, vervielfacht. Insbesondere kann der vorgeschlagene Kommutator Kondensatorplatten in etwa 10 Ebenen bis etwa 1000 Ebenen aufweisen.

Aus Figur 3 ist ebenfalls ersichtlich, dass im Bereich des Kontaktelementes L2 Kondensatorplatten P2 angeordnet sind, welche mit dem Kontaktelement L2 in elektrisch leitfähiger Verbindung stehen. Jeweils zwischen einem Plattenpaar P2 befindet sich eine Kondensatorplatte P1. Diese steht mit dem in Figur 3 nicht sichtbaren Kontaktelement L1 in leitfähiger Verbindung. Um einen Kurzschluss der Kontaktelemente L1 und L2 zu verhindern, weist die Kondensatorplatte P1 im Bereich des Kontaktelementes L2 einen Spalt 4 zum Kontaktelement L2 auf. Dieser Spalt 4 kann mit demselben Dielektrikum 3 ausgefüllt sein, welches auch zwischen den Kondensatorplatten P2 und P1 angeordnet ist.

In derselben Weise sind im Bereich des Kontaktelementes L5 die Kondensatorplatten P3 ersichtlich, welche nicht in elektrisch leitfähigem Kontakt mit dem Kontaktelement L5 stehen. Dazwischen befinden sich Kondensatorplatten P4, welche eine elektrisch leitfähige Verbindung mit dem Kontaktelement L5 eingehen und auf diese Weise einen Kondensator zwischen dem Kontaktelement L5 und dem Kontaktelement L6 bilden. Auf diese Weise bilden die Kondensatorplatten im Inneren des Grundkörpers des Kommutators 1 eine stabile Einheit mit konstanter Masseverteilung, welche bei Rotation nur eine geringe Unwucht zeigt und in einfacher Weise automatisiert herstellbar ist. Das Ersatzschaltbild der in Figur 2 und 3 erläuterten Plattenanordnung entspricht dabei der aus Figur 1 bekannten Kondensatoranordnung.

Dem Fachmann ist selbstverständlich geläufig, dass die Erfindung nicht auf die dargestellten Ausführungsbeispiele beschränkt ist. Vielmehr können bei der Umsetzung der Erfindung Modifikationen und Änderungen vorgenommen werden, ohne die Erfindung an sich wesentlich zu verändern. Die vorstehende Beschreibung ist daher lediglich als erläuternd anzusehen.

## Patentansprüche

1. Kommutator (1) mit einem im Wesentlichen zylindrischen Grundkörper, an dessen Mantelfläche zumindest zwei Kontaktelemente (L1, L2, L3, L4, L5, L6, L7, L8) angeordnet sind, wobei jedes Kontaktelement über zumindest einen Kondensator (C1, C2, C3, C4, C5, C6, C7, C8) mit jedem benachbarten Kontaktelement (L1, L2, L3, L4, L5, L6, L7, L8) verbunden ist, **dadurch gekennzeichnet, dass** die Kondensatoren (C1, C2, C3, C4, C5, C6, C7, C8) durch Platten (P1, P2, P3) gebildet werden, welche im Inneren des Grundkörpers angeordnet sind und welche mit je einem Kontaktelement in elektrisch leitfähiger Verbindung stehen.

2. Kommutator nach Anspruch 1, **dadurch gekennzeichnet, dass** der zylindrische Grundkörper ein Dielektrikum (3) enthält.

3. Kommutator nach einem der Ansprüche 1 oder 2, **dadurch gekennzeichnet, dass** jede Platte (P1, P2, P3) die Form eines Kreissektors oder eines Kreisabschnittes aufweist, dessen Öffnungswinkel so gewählt ist, dass sich die Außenkante ausgehend von der Mitte eines Kontaktelementes bis etwa zur Mitte der benachbarten Kontaktelemente erstreckt.

4. Kommutator nach einem der Ansprüche 2 oder 3, **dadurch gekennzeichnet, dass** mehrere Platten (P1, P2, P3) beabstandet an einem Kontaktelement angeordnet sind.

5. Kommutator nach einem der Ansprüche 1 bis 4, **dadurch gekennzeichnet, dass** dieser eine Aufnahme (2) zur Befestigung auf einer Welle aufweist.

6. Kommutator nach einem der Ansprüche 1 bis 5, **dadurch gekennzeichnet, dass** zwischen den Platten (P1, P2, P3) und den Kontaktelementen (L1, L2, L3, L4, L5, L6, L7, L8) eine Lötverbindung und/oder eine Schweißverbindung und/oder eine Klebung vorhanden ist.

7. Kommutator nach einem der Ansprüche 1 bis 6, **dadurch gekennzeichnet, dass** dieser in einem Sinterverfahren und/oder einem Aufdampfverfahren erhältlich ist.

8. Elektromotor mit einem Kommutator nach einem der Ansprüche 1 bis 7.
